# FASCICULE DE BREVET EUROPEEN

(11) **EP 4 452 673 B1**
(45) Date de publication et mention de la délivrance du brevet: **04.03.2026**
(21) Numéro de dépôt: 22839794.9
(22) Date de dépôt: 19.12.2022
(51) Int. Cl.: B60C 23/04, B29D 30/00

(54) **DISPOSITIF DE FIXATION A UNE ENVELOPPE PNEUMATIQUE D'UN ORGANE ÉLECTRONIQUE**
VORRICHTUNG ZUR BEFESTIGUNG EINES ELEKTRONISCHEN ELEMENTS AN EINER REIFENKARKASSE
DEVICE FOR SECURING AN ELECTRONIC MEMBER TO A TYRE CASING

(30) Priorité: 23.12.2021 FR 2114313
(43) Date de publication de la demande: 30.10.2024
(73) Titulaire: COMPAGNIE GENERALE DES ETABLISSEMENTS MICHELIN, 63000 Clermont-Ferrand (FR)
(72) Inventeur: FAGOT-REVURAT, Lionel, 63040 CLERMONT-FERRAND CEDEX 09 (FR); CARTERON, Francis, 63370 LEMPDES (FR)
(74) Mandataire: M.F.P. Michelin
(86) Numéro de dépôt international: PCT/EP2022/086590
(87) Numéro de publication internationale: WO 2023/117862

(56) Documents cités:
- EP-A1- 3 030 434
- EP-B1- 3 030 434
- DE-A1- 102007 030 231
- US-A1- 2019 160 895

## Description

### Domaine de l'invention

La présente invention concerne les dispositifs de fixation à une enveloppe pneumatique d'un organe électronique dans le but de véhiculer des informations d'identification sur l'enveloppe pneumatique ou des paramètres physiques de l'enveloppe pneumatique mesurés par l'organe électronique au cours de la vie de l'enveloppe pneumatique.

### Arrière-plan technologique

Le développement des objets électroniques dans les enveloppes pneumatiques permet de rendre connectables et connectées les enveloppes pneumatiques, ce qui provoque le développement de nouveaux services afin d'optimiser, par exemple, l'usage de l'enveloppe pneumatique. Or ces organes électroniques comportent parfois des composants fragiles thermo mécaniquement ce qui nécessite d'introduire l'organe électronique en post fabrication de l'enveloppe pneumatique. De plus, afin de ne pas détériorer l'organe électronique au cours de l'usage de l'enveloppe pneumatique, l'introduction d'un dispositif de fixation comme interface entre l'organe électronique et le pneumatique à émerger. Ces dispositifs de fixation sont généralement élastiques pour ne pas contraindre fortement l'enveloppe pneumatique, pour suivre les fortes déformations subies par l'enveloppe pneumatique au cours de son usage et pour amortir les sollicitations transmises à l'organe électronique et sont connus par les documents US2019160895A1, EP3030434B1 et DE102007030231A1. L'une des conceptions de dispositif les plus usuellement employées est un patch présentant une semelle servant de fixation à l'enveloppe pneumatique et muni d'une paroi fermée sur elle-même s'étendant depuis la semelle jusqu'à une ouverture. La paroi sert à saisir ou maintenir l'organe électronique en position au sein du dispositif, l'organe électronique étant monté serré à l'intérieur de la paroi qui se déforme élastiquement. L'ouverture autorise l'insertion et l'extraction de l'organe électronique du patch grâce à l'élasticité du matériau de l'ouverture.

Le document illustre un patch de cette nature. Tout d'abord ce type de patch ne facilité pas l'insertion ou l'extraction de l'organe électronique du fait du montage serré de l'organe électronique au sein du patch. Ainsi, il est difficile de dimensionner un outillage automatique d'insertion ou d'extraction de l'organe électronique au sein du dispositif de fixation monté sur enveloppe pneumatique qui soit à la fois bon marché et efficace en raison de la dispersion de fabrication du patch, de l'organe électronique et du montage serré de l'organe électronique dans le patch qui est indispensable. De plus, sous forte sollicitation de l'enveloppe pneumatique, la mesure des paramètres physiques effectuées par l'organe électronique est erronée en raison d'un échauffement excessif du patch. Ainsi, les mesures effectuées sont non opérationnelles même en présence d'une procédure de correction des mesures notamment lors des phases transitoires qui apparaissent lors de la mise en dérive ou en carrossage de l'enveloppe pneumatique ou des phases de freinage ou de fortes accélérations de l'enveloppe pneumatique. Enfin cet échauffement du patch conduit aussi à réduire son endurance mécanique et par conséquent sa durée de vie. Ainsi, l'extraction de l'organe électronique du dispositif de fixation est primordiale car la durée de vie de l'organe électronique est supérieure à celle de l'enveloppe pneumatique et/ou celle du patch.

Les objets de l'invention qui vont suivre ont pour objectif de résoudre les problèmes d'insertion et d'extraction de l'organe électronique qui soit à la fois économique, fiable et sans impact fort sur l'endurance du patch.

### Description de l'invention

L'invention porte sur un dispositif de fixation à une paroi d'une enveloppe pneumatique d'un organe électronique comprenant :
- une semelle apte à être fixée à la paroi de l'enveloppe pneumatique par l'intermédiaire d'une surface externe ;
- une paroi de maintien fermée, apte à retenir ledit organe électronique, s'étendant depuis la semelle jusqu'à un bord libre et définissant avec ladite semelle un volume ouvert,
- le volume, apte à accueillir au moins une partie dudit organe électronique, étant défini par la surface interne de ladite semelle et de ladite paroi de maintien, présentant une ouverture délimitée par le bord libre de ladite paroi de maintien, apte à se déformer pour introduire ou extraire ledit organe électronique dudit volume.
Le dispositif de fixation est caractérisé en ce que ladite paroi de maintien présente sur sa surface interne N sillons, N étant un nombre entier supérieur iou égal à 2, s'étendant chacun depuis la surface interne de la semelle jusqu'au bord libre, en ce que la semelle comprend sur sa surface interne M canaux prinipaux, M étant un nombe entier supérieur ou égal à 2, s'étendnat chacun des puis un des N sillons et en ce que la semelle comprend sur sa surface interne au moins un canl secondaire reliant entre eux deux des M canux principaux disjoints.

Le dispositif de fixation présente, par l'intermédiaire des sillons, un conduit fluidique entre l'extérieur du dispositif de fixation lorsqu'il est équipé de l'organe électronique et la cavité restant après l'insertion de l'organe électronique au sein du volume ouvert. En effet, l'extension du sillon latéral depuis la surface interne de la semelle jusqu'au bord libre assure la connexion fluidique. Ainsi, lors de la phase d'insertion dynamique de l'organe électronique, la réduction de la cavité d'air dans le volume ouvert ne crée par de surpression dans cette cavité par l'équilibre des pressions avec l'extérieur. Par conséquent, la pression qui s'exerce sur l'organe électronique lors de son insertion dans le volume ouvert est constante ce qui limite les efforts d'insertion De plus, ces efforts sont plus facilement évaluables pour la conception d'un outil automatisé d'insertion. De plus, ces efforts d'insertion sont aussi moins importants par la présence du sillon ce qui permet de définir un outillage d'insertion robuste et économique.

Le fait de multiplier les sillons permet de répartir le volume de vide autour de la paroi de maintien, ce qui permet de s'affranchir de toute maladresse lors des phases d'insertion ou d'extraction qui conduirait à fermer un sillon latéral ce qui empêcherait d'équilibrer les pressions en cas de l'unicité du sillon. De plus, la multiplication des sillons permet de diminuer les efforts d'insertion et d'extraction de l'organe électronique sur la paroi de maintien ce qui assure une meilleure tenue mécanique du dispositif de fixation.

De même lors de l'extraction de l'organe électronique, l'équilibre des pressions entre la cavité restante à l'intérieur du volume et l'extérieur du dispositif de fixation assure de ne pas créer une dépression entre ces deux milieux fluidiques. Ainsi, aucune force supplémentaire ne s'exerce sur le dispositif de fixation ni sur l'organe électronique lors de l'étape d'extraction. De ce fait, le dimensionnement de l'outillage d'extraction est plus robuste et meilleur marché car les efforts d'extraction à exercer par cet outillage est moindre en raison de la présence du sillon.

Enfin, lors de fortes sollicitations de l'enveloppe pneumatique en condition d'usage sévère comme la mise en dérive, en carrossage de l'enveloppe pneumatique ou les phases transitoires de freinage et d'accélération, tout mouvement de l'organe électronique au sein du dispositif de fixation ou de déformation du dispositif de fixation ne génère pas de surpression ou dépression par rapport à la pression de gonflage au sein de la cavité fluidique constituée par l'enveloppe pneumatique et la roue du fait de la présence de ce sillon qui équilibre à tout instant le pression entre les deux espaces fluidiques. De ce fait, aucun échauffement supplémentaire n'apparait dans la cavité restante ce qui limite fortement les variations des paramètres physiques des capteurs de l'organe électronique au cas où celui-ci en est équipé et d'autre part limite les efforts transmis au patch de fixation, ce qui améliore son endurance mécanique.

Ces canaux principaux permettent de constituer un volume de vide minimale dans la cavité restante lorsque l'organe électronique est inséré dans la volume ouvert de façon que l'une des surfaces extérieures de l'organe électronique vienne en contact avec la surface interne de la semelle. En effet la surface d'appui de l'organe électronique est souvent plane pour des raisons pratiques alors que la surface interne de la semelle suit la courbure de l'enveloppe pneumatique. Cette courbure de l'enveloppe pneumatique est évolutive au tour de roue en condition d'usage en particulier par la présence de l'aire de contact qui représente la surface de contact entre l'enveloppe et le sol. De ce fait, il est possible d'emprisonner du fluide entre la surface interne de la semelle et la surface d'appui de l'organe électronique en fractionnant la cavité restante. En étant en connexion fluidique avec l'extérieur par l'intermédiaire du sillon latéral auquel il est joint, on assure l'équilibre des pressions entre l'extérieur du dispositif de fixation et la cavité restante au niveau de la surface interne de la semelle mais en cas de fractionnement de cette cavité fluidique restante. De plus, ce vide minimal permet de piloter la rigidité du piston fluidique du sillon latéral en constituant une réserve de fluide. Plus cette réserve de vide est importante, moins la rigidité du sillon latéral est forte, indépendamment de la section minimale du sillon latéral.

Le fait de multiplier les canaux principaux permet de répartir le volume de vide sur la totalité de la surface interne de la semelle, ce qui permet de s'affranchir de toute maladresse lors des phases d'insertion ou d'extraction qui conduirait à mal positionner l'organe électronique au sein du volume ouvert pouvant même fermer un canal principal ce qui empêcherait d'équilibrer les pressions en cas de l'unicité du canal principal. De plus, la multiplication des canaux principaux permet de répartir potentiellement les débits fluidiques au travers des sillons latéraux si la paroi de maintien est équipée de plusieurs sillons latéraux. Ainsi, l'insertion et l'extraction de l'organe électronique du volume ouvert est facilité ce qui assure une meilleure tenue mécanique du dispositif de fixation et assure un serrage homogène de l'organe électronique par la paroi de maintien.

Dans le cas où les canaux principaux présents sur la surface interne de la semelle sont disjoints, il convient afin de faciliter l'écoulement fluidique de relier entre les canaux principaux disjoints par des canaux secondaires ce qui assure un équilibre des pressions entre l'extérieur et la cavité restante lorsqu'un canal principal est obstrué et en cas de fractionnement de la cavité fluidique restante. De même, cela augmente le volume utile de la cavité restante ce qui diminue la rigidité du système fluidique des sillons latéraux.

En conclusion, la présence de ces sillons et de ces canux prinipaux etr secondaire répond à la problématique soulevée. D'autres solutions existent pour créer cette connexion fluidique entre l'extérieur du dispositif de fixation et la cavité restante comme par exemple, un orifice traversant la paroi de maintien et/ou la semelle. Cependant ces solutions créent des zones de fissuration appropriées au sein du dispositif de fixation ce qui est néfaste à l'endurance du dispositif de fixation. De plus, un conduit fermé est plus facilement refermable qu'un sillon par nature ouvert pour des matériaux élastiques dont est constituée le dispositif de fixation ce qui peut rendre inefficace l'équilibre des pressions. Enfin, le dispositif de fixation est généralement une pièce moulée ce qui la rend bon marché comme le procédé de moulage par injection. La création de sillon sur la surface interne de la paroi de maintien est aisée à réaliser par le procédé de moulage par injection en introduisant une forme miroir en saillie sur l'une des deux coquilles du moule. Un orifice traversant nécessite une étape supplémentaire de création de l'orifice post moulage du corps du dispositif de fixation ce qui est plus onéreux.

Selon un mode de réalisation particulier les N sillons sont également répartis le long du contour défini par la surface interne de la semelle et la surface interne de la paroi de maintien.

Une répartition égale des sillons sur le contour renforce l'homogénéité des efforts d'insertion et d'extraction au niveau de la semelle et de la paroi de maintien, ce qui assure un serrage homogène de l'organe électronique par la paroi de maintien et ce qui assure une meilleure endurance du dispositif de fixation.

Selon un mode de réalisation très particulier, les N sillons présentent chacun, dans un plan perpendiculaire à la direction du sillon, une largeur minimale au niveau de la surface interne de la paroi de maintien supérieure ou égale à la profondeur minimale du sillon.

Cette forme de sillon, quelle que soit la géométrie de la section du sillon : carré, rectangulaire, triangulaire, quadrilatère, demi circulaire, elliptique assure d'avoir une ouverture du sillon au moins égale à sa profondeur ce qui limite les risques de fermeture de la section par la déformation élastique de la paroi de maintien, ce qui permet d'assurer une section minimale mais sous fortes sollicitations thermomécaniques du dispositif de fixation. De plus, la paroi de maintien est généralement de fine épaisseur afin de minimiser la masse du dispositif de fixation, le dimensionnement du sillon permet de ne pas augmenter l'épaisseur de cette paroi de maintien, réduisant ainsi la masse et le cout du patch de fixation. Enfin, une fine épaisseur facilité la déformation de la paroi de maintien lors des phases d'insertion ou d'extraction de l'organe électronique.

Selon un mode de réalisation spécifique, les N sillons présentent chacun une section minimale dans le plan perpendiculaire à la direction du sillon d'au moins 0,09 mm², préférentiellement d'au moins 0,16 mm^{2.}

Cette section minimale assure que même sous très fortes sollicitations thermomécaniques potentiellement rencontrées en usage routier, la section du sillon latéral ne se refermera pas ce qui est préférable à l'endurance du dispositif et de l'organe électronique. De même selon le nombre de sillons latéraux disponibles et les sections minimales de ces sillons, cette section minimale par sillon définit une section utile minimale de débit fluidique au travers du réseau de sillons latéraux. Ce débit fluidique définit les caractéristiques de rigidité du système fluidique à une sollicitation d'insertion et d'extraction dynamique de l'organe électronique qui pilote en partie le couple constitué de la vitesse de déplacement relatif de l'organe électronique par rapport au dispositif de fixation et de l'effort extérieur à appliquer pour faire coulisser l'organe électronique dans le volume ouvert.

Spécifiquement, les M canaux principaux délimitent la surface interne de la semelle en au moins M+1 surfaces égales.

Si les M canaux principaux sont tous disjoints les uns des autres, il est préférable de les répartir sur la totalité de la surface interne de la semelle afin de répartir équitablement cette surface, notamment en cas de fractionnant de la cavité fluidique restante. Alors, la surface interne de la semelle est découpée en M+1 surfaces égales. Si, les canaux principaux se coupent entre eux, les surfaces obtenues après découpages sont égales et leur nombre est nécessairement supérieure à M+1. Par exemple, si les M canaux principaux se coupent en un unique point géométrique, la surface interne de la semelle est découpée en 2*M surfaces délimités par deux canaux différents. Découper la surface interne en sous surface égales par l'intermédiaire des canaux principaux minimise le risque de dysfonctionnement du circuit fluidique par l'obstruction de certains sillons ou canaux principaux lorsque le dispositif de fixation est équipé d'un organe électronique au sein de son volume ouvert en condition d'usage sur pneumatique par exemple.

Très avantageusement le au moins un canal principal présente, dans un plan perpendiculaire à la direction du canal principal, une largeur minimale au niveau de la surface interne de la semelle supérieure ou égale à la profondeur minimale du canal principal.

La semelle du dispositif de fixation doit suivre la courbure de l'enveloppe pneumatique qui est évolutive au tour de roue de l'enveloppe pneumatique. Pour satisfaire cette condition la semelle est souvent faite en matériaux élastique qui se déforme fortement sous sollicitations thermomécaniques. L'efficacité du volume de vide crée dépend de la capacité du canal principal à ne pas s'obstruer sous ces fortes sollicitations thermomécaniques au cours de l'usage de l'enveloppe pneumatique afin de ne pas créer de surpression ou un échauffement de la matière qui est néfaste à l'endurance du dispositif de fixation et à l'organe électronique. La section présentant une telle ouverture par rapport à sa profondeur facilité à coup sûr l'obtention d'un passage du fluide dans le canal principal pour une sollicitation thermomécanique donnée et quelle que soit la forme de la section du canal principal.

Préférentiellement chacun des M canaux principaux présentent chacun une section minimale dans le plan perpendiculaire à la direction du canal principal d'au moins 0,09 mm², préférentiellement d'au moins 0,16 mm^{2.}.

Cette section minimale assure que même sous très fortes sollicitations thermomécaniques potentiellement rencontrées en usage routier, la section du canal principal ne se refermera pas ce qui est préférable à l'endurance du dispositif et de l'organe électronique. De même selon le nombre de canaux principaux disponibles et les sections minimales de ces canaux principaux, cette section minimale par canal principale définit le volume minimale de fluide au travers du réseau de canaux principaux. Ce volume minimal définit les caractéristiques de rigidité du système fluidique à une sollicitation d'insertion et d'extraction de l'organe électronique qui pilote en partie le couple constitué de la vitesse de déplacement et de l'effort extérieur à appliquer pour faire coulisser l'organe électronique dans le volume ouvert.

Avantageusement, le au moins un canal secondaire présente, dans un plan perpendiculaire à la direction du canal secondaire une largeur minimale au niveau de la surface interne de la semelle supérieure ou égale à la profondeur minimale du canal secondaire et préférentiellement une section minimale d'au moins 0,09 mm², préférentiellement la section minimale du canal secondaire étant d'au moins 0,09 mm².

Afin d'éviter une obturation du canal secondaire sous fortes sollicitations thermomécaniques en condition d'usage de l'enveloppe pneumatique, il est préférable de dimensionner la forme de la section du canal secondaire ainsi que préférentiellement la surface de cette section pour éviter toute obturation en condition d'usage de l'enveloppe pneumatique.

Selon un mode de réalisation très particulier, les N sillons latéraux présentent chacun un rayon de courbure supérieure ou égale à 0,05 millimètre.

Selon un mode de réalisation très particulier, les M canaux principaux présentent chacun un rayon de courbure supérieure ou égale à 0, 05 millimètre.

Selon un mode de réalisation très particulier, le au moins un canal secondaire présente un rayon de courbure supérieure ou égale à 0,05 millimètre.

Cela évite lorsque le sillon latéral ou le canal principal ou le canal secondaire présente une section de type quadrilatère des phénomènes de concentration de contraintes qui sont toujours néfaste à l'endurance du dispositif de fixation et en particulier de la paroi de maintien qui est une zone de fortes sollicitations mécaniques lors des phases d'insertion et d'extraction de l'organe électronique.

Avantageusement, le dispositif de fixation est constitué avec un matériau élastomère.

Les propriétés hyper élastiques des matériaux élastomères favorisent la déformation élastique du dispositif de fixation permettant l'insertion et l'extraction de l'organe électronique du dispositif de fixation. De plus, la paroi de l'enveloppe pneumatique n'étant pas généralement plane, l'élasticité de ce matériau permet de créer une surface de liaison efficace entre la semelle et la paroi de l'enveloppe pneumatique.

Parmi les matériaux élastomère, les mélanges caoutchouteux à base d'élastomères diéniques saturés ou insaturés tels du butyle, du SBR, du polybutadiène, du caoutchouc naturel, du poly isoprène sont de bons candidats en raison de leur compatibilité avec les mélanges caoutchouteux de l'enveloppe pneumatique. L'avantage du butyle est de procurer une excellente résistance à l'oxydation. On peut aussi utiliser comme élastomère un EPDM (acronyme en anglais de *Ethylène Propylène Diène Monomère rubber).*

Enfin, ces mélanges caoutchouteux ne nuisent pas à la performance de communication radiofréquence des organes électroniques du fait qu'ils sont des isolants électriques naturels dont leur propriété isolante peut être ajustée par l'emploi plus ou moins réduit de charges conductrices renforçantes.

L'invention porte aussi sur un arrangement d'une enveloppe pneumatique comprenant un sommet, deux flancs s'étendant depuis le sommet et se terminant chacun par un bourrelet apte à être lié à une roue et d'un dispositif de fixation dans lequel, le dispositif de fixation est fixé sur l'une des surfaces de l'enveloppe pneumatique, préférentiellement sur la surface radialement intérieure de l'enveloppe pneumatique.

La destination principale du dispositif de de fixation est l'association de celui-ci avec une enveloppe pneumatique en positionnant le dispositif sur une surfaces de l'enveloppe pneumatique obtenue après fabrication. De manière préférentielle, le dispositif de fixation est lié à la surface radialement intérieure de l'enveloppe pneumatique délimitant la cavité fermée constituée par l'enveloppe pneumatique et la roue lorsque l'enveloppe pneumatique est montée sur la roue, ce qui protège le dispositif de fixation et éventuellement l'organe électronique de toute agressions extérieures à l'enveloppe pneumatique.

Avantageusement, le dispositif de fixation est fixé au droit du sommet de l'enveloppe pneumatique.

Très avantageusement, un organe électronique est inséré dans le dispositif de fixation de l'arrangement

Lorsque l'organe électronique destiné à s'insérer dans le volume ouvert du dispositif de fixation mesure des paramètres physiques de l'enveloppe pneumatique en lien avec le sommet de l'enveloppe pneumatique, il convient de positionner le dispositif de fixation au plus près de cette zone pour obtenir une mesure fiable et fidèle de ce paramètre physique. Ces paramètres physiques peuvent être par exemple, l'accélération radiale ou longitudinale du sommet afin de déterminer la forme de l'aire de contact représentant le contact entre l'enveloppe pneumatique en condition monté, chargé et le sol voire l'eau en condition d'hydroplanage.

### Description brève des dessins

L'invention sera mieux comprise à la lecture de la description qui va suivre donnée uniquement à titre d'exemple non limitatif et faite en se référant aux figures annexées dans lesquelles les mêmes numéros de référence désignent partout des parties identiques et dans lesquelles :
- La Fig. 1 présente une vue en perspective d'un dispositif de fixation d'un organe électronique à un pneumatique de l'état de l'art ;
- La Fig. 2 présente une vue en perspective d'un dispositif de fixation selon un premier mode partiel de réalisation de l'invention ;
- La Fig. 3 présente une vue en perspective d'un dispositif de fixation dans un second mode pratiel de réalisation de l'invention dans lequel la semelle comprend un canal principal ;
- La Fig. 4 présente une vue en perspective d'un dispositif de fixation dans un second mode partiel de réalisation avantageux selon l'invention ;
- La Fig. 5 présente une vue en perspective et en coupe d'une enveloppe pneumatique équipé d'un dispositif de fixation selon l'invention.

### Description détaillée de modes de réalisation

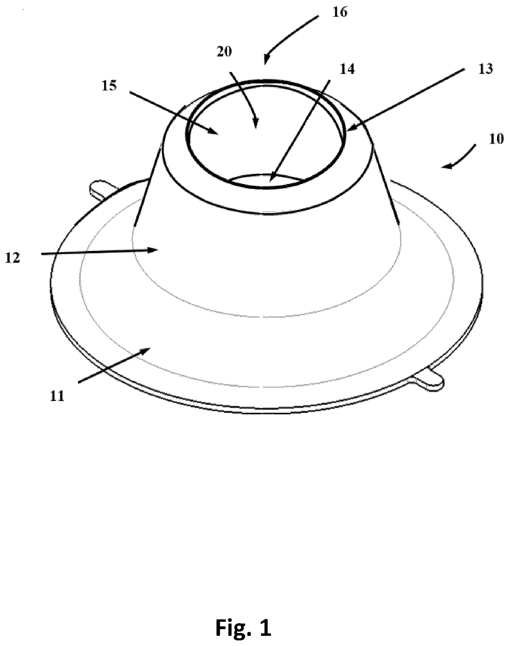

La Fig. 1 est une vue en perspective d'un dispositif de fixation 10 d'un organe électronique à une enveloppe pneumatique de l'état de la technique. Le dispositif de fixation 10 est ici de type ouvert, c'est-à-dire que l'insertion ou l'extraction de l'organe électronique du dispositif de fixation est réalisée par l'intermédiaire d'un orifice accessible même lorsque le dispositif de fixation 10 est fixé sur l'enveloppe pneumatique. De ce fait, les opérations d'insertion ou d'extraction de l'organe électronique du dispositif de fixation 10 peuvent avoir lieu directement sur l'enveloppe pneumatique.

Ce dispositif de fixation 10 présente une semelle 11 dont la surface externe a pour fonction de se fixer à la surface d'une enveloppe pneumatique à l'aide de solutions techniques de l'état de l'art bien connu par l'Homme du métier. Le dispositif de fixation 10 est ici de révolution autour d'un axe de rotation perpendiculaire à la semelle 11. A cette semelle 11 est attenante une paroi de maintien 12, qui est fermée sur 360 degrés. Cette paroi de maintien 12 présente une ouverture 16 délimitée par un bord libre 13 de la paroi de maintien 12 du dispositif de fixation 10. L'orifice 16 ouvre sur un volume ouvert 20 délimité par la surface interne 14 de la semelle 11 et la surface interne 15 de la paroi de maintien 11. L'orifice 16 est déformable pour permettre l'insertion et l'extraction d'un organe électronique du volume ouvert 20. La propriété élastique du matériau de cette paroi de maintien 12 autorise cet agrandissement de l'orifice 16 pour les phases d'insertion et d'extraction. De plus, elle assure aussi un effort de maintien ou de serrage sur l'organe électronique lorsque celui-ci est logé dans le volume ouvert 20.

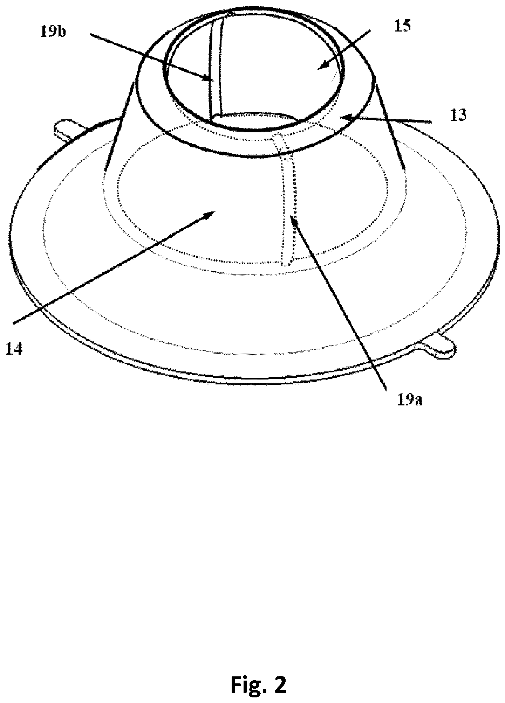

La figure 2 présente un dispositif de fixation 10 selon un premier mode partiel de réalisation de l'invention obtenu à partir du dispositif de fixation de la Fig. 1. La paroi de maintien 12 comprend sur sa surface interne 15 deux sillons 19a et 19b s'étendant depuis la surface interne 14 de la semelle 11 jusqu'au bord libre 13 de la paroi de maintien 12.

Chaque sillon 19a e 19b constitue un conduit fluidique entre l'extérieur du dispositif de fixation 10 et l'espace libre du volume ouvert 20 du dispositif de fixation 10. On entend par espace libre la différence entre le volume initiale du volume ouvert 20 et le volume occupé par l'organe électronique à chaque instant des phases d'insertion ou d'extraction de l'organe électronique du volume ouvert 20. Plus cet espace libre est réduit, plus l'effort d'insertion ou d'extraction à exercer sur l'organe électronique est important, en particulier en l'absence de ces sillons 19a et 19b.

Ici, les deux sillons 19a et 19b sont équitablement répartis sur la périphérie de la surface interne 15 de la paroi de maintien 12, et de ce fait sur la périphérie de la surface interne 14 de la semelle 11, afin de maximiser l'efficacité du système fluidique en minimisant les risques d'obstruction des sillons. La section de ce sillon est ici de forme demi circulaire, elle pourrait être de forme carré, rectangulaire, ovale ou elliptique, avec un rayon de l'ordre de 0,3 millimètres. La section est ici par construction uniforme, elle pourrait être évolutive, lorsque le dispositif de fixation 10 n'est pas équipé de l'organe électronique et à une valeur de l'ordre de 0,135 millimètre carré. Cette section qui est la section minimale est suffisante pour limiter les efforts d'insertion et d'extraction à des valeurs raisonnable pour un travail manuel par l'homme du métier, en particulier par la présence de deux sillons au lieu d'un seul. De plus, elle assure, même en cas d'insertion ou d'extraction imparfaite de l'organe électronique du volume ouvert 20 du dispositif de fixation 10, c'est à-dire ayant une trajectoire de l'organe électronique non perpendiculaire à la surface interne 14 de la semelle 11, que le volume du conduit fluidique restant, constitué des sillons 19a et19b, sera suffisante pour faciliter les opérations d'insertion et d'extraction. En particulier, cela permet de définir l'effort maximale d'extraction ou d'insertion de l'organe électronique du dispositif de fixation dans les cas d'opérations imparfaites, ce qui permet d'une part le dimensionner de façon adéquate l'organe électronique et le dispositif de fixation 10 en termes de résistance mécanique et d'autre part d'automatiser les opérations d'insertion ou d'extraction.

Enfin, l'obtention de ces sillons 19a et 19b est aisé industriellement lorsque le dispositif de fixation 10 est obtenu par un procédé de moulage. En effet, il suffit d'ajouter, par exemple, dans les matrices du moule d'un dispositif de fixation de l'état d l'art deux baguettes, ici droite de section circulaire, ayant l'image inverse du sillon 19a ou 19b, afin de générer ces sillons 19a et 19b directement lors de l'opération de moulage du dispositif de fixation 10. Cela n'ajoute pas de temps de fabrication supplémentaire, les baguettes peuvent être intimement liées aux matrices du moule et servent à la réalisation de plusieurs pièces puisque réutilisables. En cas de section de sillon de forme carré ou elliptique, il convient d'ajouter des rayons de raccordement afin de faciliter le démoulage des dispositifs de fixation 10. De ce fait, la solution technique est économiquement minimale par rapport à la réalisation d'un dispositif de fixation 10 de l'état de l'art. Et mécaniquement, le sillon est obtenu en même temps que le dispositif de fixation sans opération ultérieure sur le dispositif de fixation comme une découpe qui peut le fragiliser. Cela assure une meilleure résistance au dispositif de fixation 10 équipé du dit sillon.

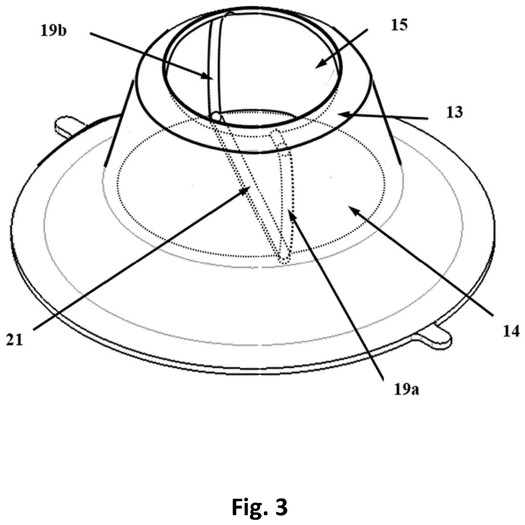

La figure 3 est un exemple d'un dispositif de fixation 10 selon un second mode partiel de réalisation. En plus de la présence de sillons, ici au nombre de deux 19a et 19b, sur la surface interne 15 de la paroi de maintien 12, la surface interne 14 de la semelle 11 présente aussi un canal principal 21.

Ce canal principal 21débouche à ces deux extrémités dans chacun des sillons 19a et 19b puisque ceux-ci sont diamétralement opposés. Ici les sillons sont équitablement répartis sur la surface interne 15 de la paroi de maintien 12 qui est de révolution, et le canal principal 21 est positionné de sorte que la surface interne 14 de la semelle 11 soit séparée en deux surfaces quasi égales par le canal principal 21.

Lorsque l'organe électronique est introduit dans le dispositif de fixation 10 de sorte que celui-ci vienne en contact avec la surface interne 14 de la semelle 11, ce qui est fréquent, l'espace libre laissé par l'organe électronique dans le volume ouvert 20 du dispositif de fixation 10 est réduit voire nul. De ce fait, les efforts d'insertion, respectivement d'extraction, de l'organe électronique sur les derniers instants d'insertion, respectivement dans les premiers instants d'extraction, augmentent grandement malgré la présence des sillons 19a et 19b. La présence du canal principal 21 permet d'une part de créer un volume de vide résiduel pour l'espace libre, ce qui conduit à diminuer fortement les efforts d'insertion ou d'extraction lorsque l'organe électronique a vocation à se positionner jusqu' à la surface interne 14 de la semelle 11. Pour être efficace pour le circuit fluidique constitué des sillons 19 a et 19b, il est préférable que ce canal principal 21 débouche dans les sillons 19a et 19b au niveau de la surface interne 14 de la semelle 11. Dans une autre configuration, le dispositif de fixation 10 peut comporter deux canaux principaux s'étendant à ces extrémités sur la surface interne 15 de la paroi de maintien 12. A l'une seulement de ces extrémités, le canal principal débouche dans un sillon. Et les deux canaux principaux découpent la surface interne 14 de la semelle 11 en trois sous surfaces de dimension quasi égales. Ainsi, on offre, statistiquement plus de chances, de trouver un canal principal non obstrué et en connexion fluidique avec l'extérieur par l'intermédiaire d'un sillon même lorsque l'organe électronique est positionné de façon imparfaite dans le volume ouvert 20 du dispositif de fixation 10.

Ici, la section du canal principal 21 est ici de forme demi circulaire, elle pourrait être de forme carré, rectangulaire, ovale ou elliptique, avec un rayon de l'ordre de 0,3 millimètres. La section est ici par construction uniforme, mais elle pourrait être évolutive, lorsque le dispositif de fixation n'est pas équipé de l'organe électronique et à une valeur de l'ordre de 0,135 millimètre carré. Cette section qui correspond à la section minimale est suffisante pour limiter les efforts d'insertion et d'extraction à des valeurs raisonnable pour un travail manuel par l'homme du métier. Cette section minimale peut être plus faible si le nombre de canaux principaux est suffisant pour assurer une volume global satisfaisant dans l'espace libre. En particulier, cela permet de définir l'effort maximale d'extraction ou d'insertion de l'organe électronique du dispositif de fixation dans les cas d'opérations imparfaites, ce qui permet d'une part le dimensionner mécaniquement de façon adéquate l'organe électronique et le dispositif de fixation 10 et d'autre part d'automatiser les opérations d'insertion ou d'extraction.

Cette solution technique est industrialisable en intégrant une forme représentant l'image inverse du canal principal 21 dans l'une des formes du moule du dispositif de fixation. Ainsi, le canal principal 21est obtenu en même temps que le dispositif de fixation 10 sans opération ultérieure sur le dispositif de fixation 10 comme une découpe qui peut le fragiliser. Cela assure une meilleure résistance au dispositif de fixation 10équipé du dit canal principal 21.

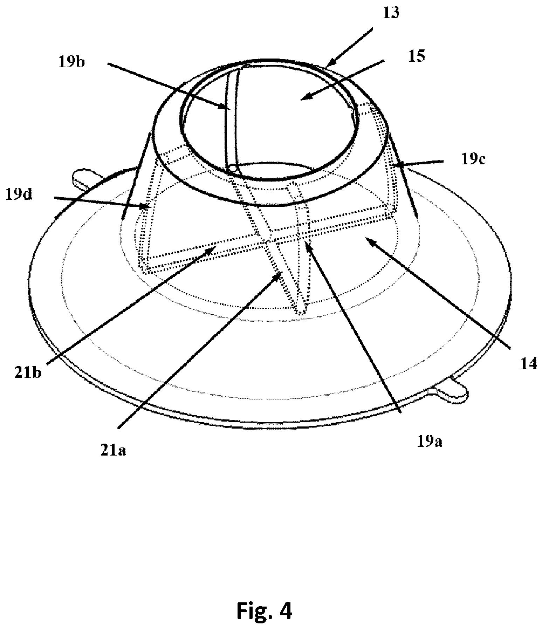

La figure 4 est une vue en perspective d'un dispositif de fixation 10 selon une variante du second mode partiel de réalisation du dispositif de fixation 10 de l'invention.

Dans cette variante, la surface interne 14 de la semelle 11 comprend deux sillons principaux 21a et 21b qui se coupent entre eux. Ceux-ci délimitent, dans le cas de la Fig. 4, la surface interne 14 en quatre sous-espaces égaux. Chaque sous-espace est délimité par les deux canaux principaux 21 a et 21b et représente une portion de la surface interne 14 de la semelle 11 sur un secteur angulaire de 90 degrés. En effet, le dispositif de fixation 10 de la Fig. 4 est de révolution autour de son axe de rotation perpendiculaire à la semelle 11.

Chaque canal principal 21a et 21b débouche à chacune de ces extrémités dans un sillon 19a, 19b, 19c et 19d. Ces sillons sont eux-mêmes équitablement répartis sur la surface interne 15 de la paroi de maintien 12. Ils découpent la surface interne 15 en quatre secteurs angulaires égaux de 90 degrés chacun. Ainsi le volume restant ou l'espace libre du volume ouvert est équitablement réparti géographiquement autour de l'axe de rotation du dispositif de fixation 10.

Ici, la section des canaux principaux 21a et 21b est ici identique et de forme demi circulaire, elle pourrait être de forme carré, rectangulaire, ovale ou elliptique, avec un rayon de l'ordre de 0,25millimètres. La section est ici par construction uniforme, mais elle pourrait être évolutive, lorsque le dispositif de fixation n'est pas équipé de l'organe électronique et à une valeur de l'ordre de 0,09 millimètre carré. Cette section qui correspond à la section minimale est suffisante pour limiter les efforts d'insertion et d'extraction à des valeurs raisonnable pour un travail manuel par l'homme du métier. En particulier, cela permet de définir l'effort maximale d'extraction ou d'insertion de l'organe électronique du dispositif de fixation dans les cas d'opérations imparfaites, ce qui permet d'une part le dimensionner mécaniquement de façon adéquate l'organe électronique et le dispositif de fixation 10 et d'autre part d'automatiser les opérations d'insertion ou d'extraction.

Cette solution technique est industrialisable en intégrant une forme représentant l'image inverse de chaque canal principal 21a et 21b dans l'une des formes du moule du dispositif de fixation. Ainsi, les canaux principaux 21a et 21b sont obtenus en même temps que le dispositif de fixation 10 sans opération ultérieure sur le dispositif de fixation 10 comme une découpe qui peut le fragiliser. Cela assure une meilleure résistance au dispositif de fixation 10 équipé des dits canaux principaux 21a et 21b.

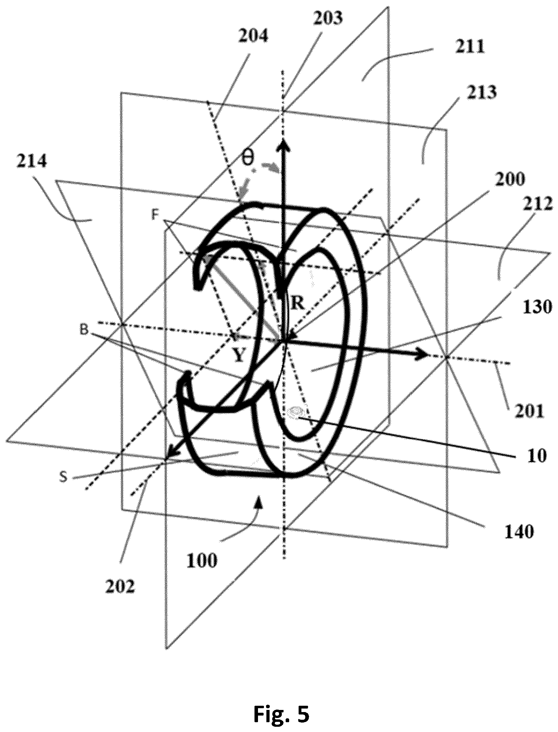

La Fig. 5 présente une coupe d'un bandage pneumatique 100 selon l'invention comprenant un sommet S prolongé par deux flancs F et se terminant par deux bourrelets B. En l'espèce, le pneumatique 100 est destiné à être monté sur une roue qui n'est pas représentée sur cette figure, au niveau des deux bourrelets B. On délimite ainsi une cavité fermée, contenant au moins un fluide sous pression, délimitée à la fois par la deuxième surface radialement intérieure 130 au bandage pneumatique 100 et par la surface externe de la roue. L'enveloppe pneumatique 100 comprend aussi une première surface 140 radialement externe à l'enveloppe pneumatique 100.

On notera l'axe de référence 201 correspondant à l'axe de référence ou axe naturel de rotation du bandage pneumatique 100 et le plan médian 211, perpendiculaire à l'axe de référence 201 et équidistant des deux bourrelets B. L'intersection de l'axe de référence 201 par le plan médian 211 détermine le centre du bandage pneumatique 200. On définira un repère cartésien au centre du bandage pneumatique 200 constitué de l'axe de référence 201, d'un axe vertical 203 perpendiculaire au sol et d'un axe longitudinal 202 perpendiculaire aux deux autres axes. Et, on définira le plan axial 212 passant par l'axe de référence 201 et l'axe longitudinal 202, parallèle au plan du sol et perpendiculaire au plan médian 211 Enfin on appellera plan vertical 213, le plan perpendiculaire à la fois au plan médian 211 et au plan axial 212 passant par l'axe vertical 203.

Tout point matériel du bandage pneumatique 100 est défini de façon unique par ses coordonnées cylindriques (Y, R, θ). Le scalaire Y représente la distance axiale au centre du bandage pneumatique 200 dans la direction de l'axe de référence 201 définie par la projection orthogonale du point matériel du pneumatique 100 sur l'axe de référence 201. On définira un plan radial 214 faisant un angle θ par rapport au plan vertical 213 autour de l'axe de référence 201. Le point matériel du bandage pneumatique 100 est repéré dans ce plan radial 214 par la distance R au centre du bandage pneumatique 200 dans la direction perpendiculaire à l'axe de référence 201 identifiée par la projection orthogonale de ce point matériel sur l'axe radial 204. Le vecteur unitaire perpendiculaire au plan radial 214 et formant un trièdre direct avec les vecteurs unitaire des directions axiale 201 et radiale 204 représente la direction circonférentielle de l'enveloppe pneumatique 100.

Ce pneumatique présente sur la surface radialement intérieure 130 un dispositif de fixation 10 qui est fixé la surface 130 par collage selon les techniques usuels de l'état de la technique lorsque le dispositif de fixation est en matériau élastomère. Le dispositif de fixation 10 est fixé au droit du sommet S de l'enveloppe pneumatique 100, ce qui améliore son endurance puisque le dispositif de fixation ainsi positionné procure moins de soucis lors des opérations de montage ou démontage de la roue sur l'enveloppe pneumatique 100. En effet, le dispositif de fixation est situé dans une zone éloignée des bourrelets B de l'enveloppe pneumatique 100. Ici, le dispositif de fixation est équipé d'un organe électronique au sein de son volume ouvert qui constitue un logement adapté à recevoir l'organe électronique. De ce fait, l'enveloppe pneumatique 100 est ici prête à être monté sur une roue pour constituer un ensemble monté. L'organe électronique peut délivrer diverses fonctions comme l'identification de certains composants comme l'organe électronique lui-même, le pneumatique.

Mais l'organe électronique peut aussi être équipé d'un capteur de pression et/ou de température afin d'évaluer la pression de gonflage de l'ensemble monté. Enfin, il peut aussi être équipé de capteur mesurant directement la courbure de l'enveloppe pneumatique comme un accéléromètre ou un flexomètre permettant de remonter à des gradeurs d'usage du pneumatique comme la vitesse angulaire, le kilométrage parcouru, la charge statique appliquée. Toute ou partie de ces grandeurs permet d'identifier des performances de l'enveloppe pneumatique comme par exemple, son usure, son adhérence ou des grandeurs intrinsèques au sol sur lequel l'enveloppe pneumatique roule.

## Revendications

1. Dispositif de fixation (10) à une paroi d'une enveloppe pneumatique d'un organe électronique comprenant :
- une semelle (11) apte à être fixée à la paroi de l'enveloppe pneumatique par l'intermédiaire d'une surface externe ;
- une paroi de maintien (12) fermée, apte à retenir ledit organe électronique, s'étendant depuis la semelle (11) jusqu'à un bord libre (13) et définissant avec ladite semelle (11) un volume (20) ouvert,
- le volume (20), apte à accueillir au moins une partie dudit organe électronique, étant défini par une surface interne (14) de ladite semelle (11) et par ladite paroi de maintien (12), présentant une ouverture (16) délimitée par le bord libre (13) de ladite paroi de maintien (12), apte à se déformer pour introduire ou extraire ledit organe électronique dudit volume (20) ;
dans lequel ladite paroi de maintien (12) présente sur sa surface interne (15) par rapport au volume (20) N sillons (19a, 19b, 19c, 19d), N étant un nombre entier supérieur ou égal à 2, s'étendant chacun depuis la surface interne (14) de la semelle (11) jusqu'au bord libre (13), la semelle (11) comprend sur sa surface interne (14) M canaux principaux (21a, 21b), M étant un nombre entier supérieur ou égal à 2 s'étendant chacun depuis un des N sillons (19a, 19b, 19c, 19); **caractérisé en ce que** la semelle (11) comprend sur sa surface interne (14) au moins un canal secondaire reliant entre eux deux des M canaux principaux (21a, 21b) disjoints.

2. Dispositif de fixation (10) selon la revendication 1, dans lequel les N sillons (19a, 19b, 19c, 19d) sont également répartis le long du contour défini par la surface interne (14) de la semelle (11) et la surface interne (15) de la paroi de maintien (12).

3. Dispositif de fixation (10) selon l'une quelconque des revendications précédentes, dans lequel les N sillons (19a, 19b, 19c, 19d) présentent chacun , dans un plan perpendiculaire à la direction du sillon une largeur minimale au niveau de la surface intérieure (15) de la paroi de maintien (12) supérieure ou égale à la profondeur minimale du sillon.

4. Dispositif de fixation (10) selon la revendication précédente, dans lequel les N sillons (19a, 19b, 19c, 19d) présentent chacun une section minimale dans le plan perpendiculaire à la direction du sillon (19a, 19b, 19c, 19d) d'au moins 0,09 mm², préférentiellement d'au moins 0,16 mm².

5. Dispositif de fixation (10) selon l'une des revendications précédentes, dans lequel les M canaux principaux délimitent la surface interne (14) de la semelle (11) en au moins M+1 surfaces égales.

6. Dispositif de fixation (10) selon l'une des revendications 1 à 5, dans lequel chacun des M canaux principaux (21, 21a, 21b) présente, dans un plan perpendiculaire à la direction du canal principal, une largeur minimale au niveau de la surface intérieure (14) de la semelle (11) supérieure ou égale à la profondeur minimale du canal.

7. Dispositif de fixation (10) selon la revendication précédente, dans lequel chacun des M canaux principaux (21, 21a, 21b) présente une section minimale dans le plan perpendiculaire à la direction du canal principal d'au moins 0,09 mm², préférentiellement d'au moins 0,16 mm².

8. Dispositif de fixation (10) selon l'une des revendications 1 à 7, dans lequel le au moins un canal secondaire présente, dans un plan perpendiculaire à la direction du canal secondaire une largeur minimale au niveau de la surface intérieure (14) de la semelle (11) supérieure ou égale à la profondeur minimale du canal secondaire, préférentiellement la section minimale du canal secondaire étant d'au moins 0,09 mm².

9. Arrangement d'une enveloppe pneumatique (100) comprenant un sommet (S), deux flancs (F) s'étendant depuis le sommet (S) et se terminant chacun par un bourrelet (B) apte à être lié à une roue et d'un dispositif de fixation (10) selon l'une des revendication 1 à 8 dans lequel, le dispositif de fixation (10) est fixé sur l'une des surfaces (130, 140) de l'enveloppe pneumatique, préférentiellement sur la surface radialement intérieure (130) de l'enveloppe pneumatique (100).

10. Arrangement selon la revendication précédente dans lequel, le dispositif de fixation (10) est fixé au droit du sommet (S) de l'enveloppe pneumatique (100).

11. Arrangement selon l'une des revendications 9 à 10 dans lequel un organe électronique est inséré dans le dispositif de fixation (10) de l'arrangement.

## Patentansprüche

1. Vorrichtung zur Befestigung (10) eines elektronischen Elements an einer Wand eines Reifenmantels, umfassend:
- eine Sohle (11), die über eine Außenfläche an der Wand des Reifenmantels befestigbar ist;
- eine geschlossene Haltewand (12), die geeignet ist, das elektronische Element zu halten, sich von der Sohle (11) bis zu einem freien Rand (13) erstreckt und mit der Sohle (11) ein offenes Volumen (20) definiert,
- das Volumen (20), das geeignet ist, wenigstens einen Teil des elektronischen Elements aufzunehmen, durch eine Innenfläche (14) der Sohle (11) und durch die Haltewand (12) definiert ist und eine von dem freien Rand (13) der Haltewand (12) begrenzte Öffnung (16) aufweist, die geeignet ist, sich zu verformen, um das elektronische Element in das Volumen (20) einzuführen oder aus ihm herauszuziehen,
wobei die Haltewand (12) auf ihrer Innenfläche (15) in Bezug auf das Volumen (20) N Rillen (19a, 19b, 19c, 19d) aufweist, wobei N eine ganze Zahl größer oder gleich 2 ist, die sich jeweils von der Innenfläche (14) der Sohle (11) bis zu dem freien Rand (13) erstrecken, wobei die Sohle (11) auf ihrer Innenfläche (14) M Hauptkanäle (21a, 21b) umfasst, wobei M eine ganze Zahl größer oder gleich 2 ist, die sich jeweils von einer der N Rillen (19a, 19b, 19c, 19) aus erstrecken; **dadurch gekennzeichnet, dass** die Sohle (11) auf ihrer Innenfläche (14) mindestens einen sekundären Kanal umfasst, der zwei disjunkte Hauptkanäle von den M Hauptkanälen (21a, 21b) miteinander verbindet.

2. Befestigungsvorrichtung (10) nach Anspruch 1, wobei die N Rillen (19a, 19b, 19c, 19d) gleichmäßig entlang der Kontur verteilt sind, die durch die Innenfläche (14) der Sohle (11) und die Innenfläche (15) der Haltewand (12) definiert ist.

3. Befestigungsvorrichtung (10) nach einem der vorhergehenden Ansprüche, wobei die N Rillen (19a, 19b, 19c, 19d) jeweils in einer zur Richtung der Rille senkrechten Ebene eine minimale Breite an der Innenfläche (15) der Haltewand (12) aufweisen, die größer oder gleich der minimalen Tiefe der Rille ist.

4. Befestigungsvorrichtung (10) nach dem vorhergehenden Anspruch, wobei die N Rillen (19a, 19b, 19c, 19d) jeweils einen minimalen Querschnitt in der zur Richtung der Rille (19a, 19b, 19c, 19d) senkrechten Ebene von mindestens 0,09 mm², vorzugsweise von mindestens 0,16 mm² aufweisen.

5. Befestigungsvorrichtung (10) nach einem der vorhergehenden Ansprüche, wobei die M Hauptkanäle die Innenfläche (14) der Sohle (11) in mindestens M+1 gleichen Flächen begrenzen.

6. Befestigungsvorrichtung (10) nach einem der Ansprüche 1 bis 5, wobei jeder der M Hauptkanäle (21, 21a, 21b) in einer zur Richtung des Hauptkanals senkrechten Ebene eine minimale Breite an der Innenfläche (14) der Sohle (11) aufweist, die größer oder gleich der minimalen Tiefe des Kanals ist.

7. Befestigungsvorrichtung (10) nach dem vorhergehenden Anspruch, wobei jeder der M Hauptkanäle (21, 21a, 21b) einen minimalen Querschnitt in der zur Richtung des Hauptkanals senkrechten Ebene von mindestens 0,09 mm², vorzugsweise von mindestens 0,16 mm² aufweist.

8. Befestigungsvorrichtung (10) nach einem der Ansprüche 1 bis 7, wobei der mindestens eine sekundäre Kanal in einer zur Richtung des sekundären Kanals senkrechten Ebene eine minimale Breite an der Innenfläche (14) der Sohle (11) aufweist, die größer oder gleich der minimalen Tiefe des sekundären Kanals ist, wobei der minimale Querschnitt des sekundären Kanals vorzugsweise mindestens 0,09 mm² beträgt.

9. Anordnung eines Reifenmantels (100), der einen Scheitel (S) und zwei Seitenwände (F), die sich von dem Scheitel (S) aus erstrecken und jeweils mit einem Wulst (B) enden, der mit einem Rad verbindbar ist, umfasst, und einer Befestigungsvorrichtung (10) nach einem der Ansprüche 1 bis 8, wobei die Befestigungsvorrichtung (10) an einer der Flächen (130, 140) des Reifenmantels befestigt ist, vorzugsweise an der radial inneren Fläche (130) des Reifenmantels (100).

10. Anordnung nach dem vorhergehenden Anspruch, wobei die Befestigungsvorrichtung (10) direkt unter dem Scheitel (S) des Reifenmantels (100) befestigt ist.

11. Anordnung nach einem der Ansprüche 9 bis 10, wobei ein elektronisches Element in die Befestigungsvorrichtung (10) der Anordnung eingesetzt ist.

## Claims

1. Fastening device (10) to a wall of a pneumatic tire of an electronic component comprising:
- a base (11) adapted to be attached to the wall of the pneumatic tire via an outer surface;
- a closed retaining wall (12) adapted to hold said electronic component, extending from the base (11) to a free edge (13) and defining with said base (11) an open volume (20),
- the volume (20), adapted to receive at least a portion of said electronic component, being defined by an inner surface (14) of said base (11) and by said retaining wall (12), having an opening (16) bounded by the free edge (13) of said retaining wall (12), capable of deforming to insert or remove said electronic component from said volume (20);
Wherein said retaining wall (12) has on its inner surface (15) relative to the volume (20) N grooves (19a, 19b, 19c, 19d), N being an integer greater than or equal to 2, each extending from the inner surface (14) of the base (11) to the free edge (13), the base (11) comprises on its internal surface (14) M main channels (21a, 21b), M being an integer greater than or equal to 2, each extending from one of the N grooves (19a, 19b, 19c, 19d),
**Characterized in that** the base (11) includes on its inner surface (14) at least one secondary channel connecting two of the M main channels (21a, 21b) that are separated.

2. Fastening device (10) according to claim 1, wherein the N grooves (19a, 19b, 19c, 19d) are equally distributed along the contour defined by the inner surface (14) of the base (11) and the inner surface (15) of the retaining wall (12).

3. Fastening device (10) according to any one of the preceding claims, wherein the N grooves (19a, 19b, 19c, 19d) each have, in a plane perpendicular to the direction of the groove, a minimum width at the inner surface (15) of the retaining wall (12) that is greater than or equal to the minimum depth of the groove.

4. Fastening device (10) according to the preceding claim, wherein the N grooves (19a, 19b, 19c, 19d) each have a minimum cross-section in the plane perpendicular to the direction of the groove (19a, 19b, 19c, 19d) of at least 0.09 mm², preferably at least 0.16 mm².

5. Fastening device (10) according to one of the preceding claims, in which the M main channels split the internal surface (14) of the base (11) into at least M+1 equal surfaces.

6. Fastening device (10) according to one of claims 1 to 5, in which each of the M main channels (21, 21a, 21b) has, in a plane perpendicular to the direction of the main channel, a minimum width at the inner surface (14) of the base (11) that is greater than or equal to the minimum depth of the channel.

7. Fastening device (10) according to the preceding claim, wherein each of the M main channels (21, 21a, 21b) has a minimum cross-section in the plane perpendicular to the direction of the main channel of at least 0.09 mm², preferably at least 0.16 mm².

8. Fastening device (10) according to one of claims 1 to 7, wherein the at least one secondary channel has, in a plane perpendicular to the direction of the secondary channel, a minimum width at the inner surface (14) of the base (11) that is greater than or equal to the minimum depth of the secondary channel, preferably the minimum cross-section of the secondary channel being at least 0.09 mm².

9. Arrangement of a pneumatic tire (100) comprising a crown (S), two sidewalls (F) extending from the crown (S) and each ending in a bead (B) suitable for being mounted on a wheel, and a fastening device (10) according to any one of claims 1 to 8, wherein the fastening device (10) is attached to one of the surfaces (130, 140) of the pneumatic tire, preferably to the radially inner surface (130) of the pneumatic tire (100).

10. Arrangement according to the preceding claim in which the fastening device (10) is attached at the top (S) of the pneumatic tire (100).

11. Arrangement according to one of claims 9 to 10, wherein an electronic component is inserted into the fastening device (10) of the arrangement.
